# EUROPÄISCHE PATENTANMELDUNG

(11) **EP 1 640 869 A2**
(43) Veröffentlichungstag der Anmeldung: **29.03.2006**
(21) Anmeldenummer: 05107408.6
(22) Anmeldetag: 11.08.2005
(51) Int. Cl.: G06F 11/18

(54) **Verfahren zur Durchführung eines Votings von redundanten Informationen**

(30) Priorität: 24.09.2004 DE 102004046292
(71) Anmelder: ROBERT BOSCH GMBH, 70442 Stuttgart (DE)
(72) Erfinder: Weiberle, Reinhard, 71665, Vaihingen/Enz (DE); Mueller, Bernd, 70825, Korntal (DE); Angerbauer, Ralf, 71701, Schwieberdingen (DE); Boehl, Eberhard, 72768, Reutlingen (DE)

(57) **Zusammenfassung**

Bei der Erzeugung und Verarbeitung von Informationen mittels eines mehrere, möglicherweise redundante Anwendungseinheiten (3) aufweisendes elektronischen Systems (1a) können Fehler auftreten. Zur Entscheidung, ob ein Fehler vorliegt bzw. ob und welche Art einer Fehlerbehandlung ausgewählt werden soll, wird üblicherweise ein sogenanntes Voting bezüglich der vorliegenden redundanten Informationen durchgeführt. Um ein Votingverfahren zu ermöglichen, das ein zur Übermittlung von redundanten Informationen eingesetztes Kommunikationssystem möglichst gering belastet, wird vorgeschlagen, dass von einer Anwendungseinheit (3) eine Votinganforderung mittels eines Broadcasting-Mechanismus über das Kommunikationssystem an die anderen Anwendungseinheiten (3) gesendet wird und mindestens eine der anderen Anwendungseinheiten (3), die eine der Anforderung entsprechende Information ermittelt hat, diese an die anfordernde Anwendungseinheit (3) übermittelt. Das Kommunikationssystem ist vorteilhafterweise ein Bussystem (6, 6a, 6b).

## Beschreibung

Die Erfindung betrifft ein Verfahren zur Durchführung eines Votings von redundanten Informationen, die von mehr als einer Anwendungseinheit ermittelt werden, wobei die Anwendungseinheiten durch mindestens ein Kommunikationssystem miteinander verbunden sind.

Die Erfindung betrifft auch einen Votingcontroller zur Durchführung eines Votings, der von mehr als einer Anwendungseinheit ermittelten redundanten Informationen. Der Votingcontroller ist mindestens einer Anwendungseinheit zugeordnet und die Anwendungseinheiten sind durch mindestens ein Kommunikationssystems miteinander verbunden.

Die Erfindung betrifft ferner ein Computersystem, das mehrere, teilweise redundante Informationen ermittelnde Anwendungseinheiten umfasst. Die Anwendungseinheiten sind durch mindestens ein Kommunikationssystem miteinander verbunden. Auf dem Computersystem ist ein Voting durchführbar.

### Stand der Technik

Bei der Erzeugung und Verarbeitung von Informationen mittels eines elektronischen Systems, beispielsweise mit einem Computer, einem Computersystem oder einem sogenannten embedded system, können unterschiedliche Fehler auftreten. Beispielsweise kann ein Informationen erzeugender Sensor keine oder falsche Informationen (bzw. Sensorwerte) aufgrund eines Hardwaredefekts liefern.

Informationen, die innerhalb eines elektronischen Systems erzeugt bzw. verarbeitet werden, werden üblicherweise als Daten bezeichnet. Fehler bei der Verarbeitung von Daten können beispielsweise dauerhaft und stets wiederkehrend auftreten. Derartige Fehler werden als permanente Fehler bezeichnet. Daneben existieren sogenannte transiente Fehler. Diese Fehler treten sporadisch auf und sind meist schwer oder nicht vorhersagbar. Transiente Fehler treten im Gegensatz zu permanenten Fehlern nur temporär auf und verschwinden nach einiger Zeit in der Regel von selbst wieder. Bei binär codierten Daten treten transiente Fehler beispielsweise derart auf, dass sich der Wert einzelner Bits verändert. Dies kann insbesondere auch bei der Übertragung von Daten auftreten. Ursachen hierfür können zum Beispiel elektromagnetische Einflüsse, Alpha-Strahlung oder Neutronen-Strahlung sein.

Bei vielen elektronischen Systemen, insbesondere bei elektronischen Systemen, die zur Durchführung sicherheitsrelevanter Funktionen eingesetzt werden, ist ein Erkennen von auftretenden Fehlern bzw. ein fehlertolerantes Verhalten bei der Ausführung der Funktionen erforderlich.

Es ist bekannt, zum Erkennen von Fehlern bzw. zum Behandeln von erkannten Fehlern Teilsysteme eines elektronischen Systems redundant auszugestalten. Dabei können die redundanten Teilsysteme identisch (sogenannte homogene Redundanz) oder unterschiedlich (sogenannte heterogene Redundanz) ausgestaltet sein. Redundante Teilsysteme, beispielsweise redundante Sensoren, liefern bei fehlerfreier Funktion unter identischen Voraussetzungen redundante Informationen (Sensoren liefern in der Regel ähnliche, aber keine identischen Werte) oder erzeugen aus identisch vorgegebenen Daten identische Resultate (beispielsweise redundante Prozessoren in einem Mehr-Prozessor-System).

Zur Entscheidung, ob ein Fehler vorliegt bzw. ob und welche Art einer Fehlerbehandlung ausgewählt werden soll, wird üblicherweise zunächst ein sogenanntes Voting bezüglich der vorliegenden redundanten Informationen durchgeführt. Ziel des Votings ist die Entscheidung, welche der redundanten Informationen als fehlerfrei ausgewählt werden soll. Eine Möglichkeit hierbei ist, die redundanten Informationen zu vergleichen und auf einen Fehler zu schließen, wenn die redundanten Informationen nicht identisch sind, bzw. die Differenz der redundanten Informationen außerhalb eines vorgebbaren Toleranzbereichs liegen. Eine weitere Möglichkeit ist eine Mittelwertbildung über die redundanten Daten, wenn sie innerhalb eines vorgegebenen Toleranzbereichs liegen.

Liegt eine Information dreifach redundant vor, kann entschieden werden, dass die beiden identischen Informationen korrekt sind. Prinzipiell ist es jedoch auch möglich, dass die identischen Informationen fehlerhaft sind und dass eine abweichende Information korrekt ist. Jedoch ist die Wahrscheinlichkeit hierfür üblicherweise äußerst gering. In Abhängigkeit von dem eingesetzten elektronischen System ist es beispielsweise bezüglich transienter Fehler möglich, diese Wahrscheinlichkeit durch eine heterogene Ausgestaltung der redundanten Teilsysteme weiter zu verringern.

Die das Voting durchführenden Einheiten eines elektronischen Systems werden als sogenannte Votingcontroller bezeichnet. Die Informationen bzw. Daten erzeugenden und/oder verarbeitenden Teilsysteme eines elektronischen Systems werden im Folgenden auch als Anwendungseinheiten bezeichnet. Die Anwendungseinheiten können beispielsweise Sensoren, embedded systems, personal computer oder mehrere Recheneinheiten aufweisende Computersysteme sein.

Zur Übermittlung von Informationen innerhalb des elektronischen Systems, insbesondere zur Übermittlung von redundanten Daten von einer Anwendungseinheit zu einer anderen, werden typischerweise ein oder mehrere Kommunikationssysteme eingesetzt. Ein Kommunikationssystem kann als ein Computernetzwerk oder ein Mobilfunknetz realisiert sein. Das Kommunikationssystem kann insbesondere auch ein Bussystem sein.

Bekannte Votingsysteme sind häufig derart ausgestaltet, dass jeder Anwendungseinheit, die eine redundante Information ermittelt, und jede Anwendungseinheit, die eine redundante Information verarbeitet, ein Votingcontroller zugeordnet ist. Zum Austausch der redundanten Informationen sind die Votingcontroller durch ein Bussystem verbunden. Zu fest vorgegebenen, periodisch wiederkehrenden Zeitpunkten sendet jede Anwendungseinheit, die eine redundante Information bzw. ein redundantes Datum ermittelt hat, diese an die Votingcontroller, die den Anwendungseinheiten zugeordnet sind, die die redundante Information benötigen. Da bei dem bekannten Verfahren jede Anwendungseinheit zu fest vorgegebenen Zeitpunkten die redundant ermittelte Information an die die redundante Information benötigenden anderen Anwendungseinheiten übermittelt, werden hierbei häufig zeitgesteuerte Bussysteme wie beispielsweise SAFEbus, TTA oder FlexRay verwendet.

Die bekannten Systeme haben jedoch den Nachteil, dass die Votingcontroller synchronisiert werden müssen, um sicherzustellen, dass eine redundant ermittelte Information von der ermittelnden Anwendungseinheit zu den festgesetzten Zeitpunkten an jede der anderen, die Information benötigenden Anwendungseinheiten übermittelt wird. Diese Synchronisation wird beispielsweise durch periodisch versendete Nachrichten realisiert, die eine absolute oder relative Zeit beschreiben. Die Übermittlung derartiger Synchronisationsnachrichten führt jedoch zu einer Beschränkung der für eine Datenübermittlung zur Verfügung stehenden Bandbreite des Bussystems.

Es ist auch bekannt, in einem elektronischen System eine zentrale Votingeinheit vorzusehen. In diesem Fall werden redundante Daten von den Anwendungseinheiten zunächst mittels des Kommunikationssystems an die zentrale Votingeinheit übermittelt. Die zentrale Votingeinheit führt das Voting beispielsweise in Form eines Mehrheits-Votings durch und übermittelt das für fehlerfrei befundene Datum an jede einzelne der das Datum benötigenden Anwendungseinheiten. Dies führt zu einer noch stärkeren Belastung des Kommunikationssystems, da die redundanten Daten zunächst zu der zentralen Votingeinheit und dann von dieser ein daraus ausgewähltes Datum zu jeder einzelnen, das redundante Datum benötigenden Anwendungseinheit übermittelt wird.

Der vorliegenden Erfindung liegt deshalb die Aufgabe zugrunde, ein Votingverfahren zu ermöglichen, das das zur Übermittlung der redundanten Informationen eingesetzte Kommunikationssystem möglichst gering belastet.

Zur Lösung dieser Aufgabe wird ausgehend von dem Verfahren der eingangs genannten Art vorgeschlagen, dass von einer Anwendungseinheit eine Votinganforderung mittels eines Broadcasting-Mechanismus über das Kommunikationssystem an die anderen Anwendungseinheiten gesendet wird und mindestens eine der anderen Anwendungseinheiten, die eine der Anforderung entsprechende Information ermittelt haben, diese an die anfordernde Anwendungseinheit übermittelt.

Vorteile der Erfindung

Erfindungsgemäß werden redundante Informationen nicht zu fest vorgegebenen Zeitpunkten von den Anwendungseinheiten übermittelt, sondern nur bei Vorliegen einer Votinganforderung, die von einer Anwendungseinheit mittels eines Broadcasting-Mechanismus über das Kommunikationssystem an die anderen Anwendungseinheiten gesendet wird. Dadurch, dass die Votinganforderung mittels eines Broadcasting-Mechanismus an diejenigen Anwendungseinheiten übermittelt wird, die die redundante Information ermittelt haben, wird nur eine einzige Votinganforderung benötigt, um sämtliche Anwendungseinheiten, die die redundante Information ermittelt haben, zu veranlassen, die redundante Information an die anfordernde Anwendungseinheit zu übermitteln.

Dabei kann ferner vorgesehen sein, redundante Informationen nur dann zu übermitteln, wenn diese auch von einer Anwendungseinheit benötigt werden. Damit kann eine deutlich geringere Belastung des Kommunikationssystem erreicht werden, als dies bei den herkömmlichen Verfahren möglich ist.

Ferner kann das erfindungsgemäße Verfahren gleichberechtigt, d.h. ohne einen ausgewiesenen Master, durchgeführt werden, was den Realisierungsaufwand verringert. Des weiteren wird bei dem erfindungsgemäßen Verfahren keine Synchronisation der Anwendungseinheiten benötigt. Dadurch können die Votingcontroller noch einfacher aufgebaut werden und es wird die Belastung des Kommunikationssystems noch weiter reduziert, da keine Synchronisationsdaten über das Kommunikationssystem gesendet werden müssen.

Das Kommunikationssystem ist beispielsweise als ein Computernetzwerk oder ein Mobilfunknetzwerk ausgebildet. Vorzugsweise wird als Kommunikationssystem jedoch ein Bussystem verwendet. Der Einsatz von Bussystemen, beispielsweise dem CAN, ermöglichen eine besonders schnelle Datenkommunikation innerhalb eines elektronischen Systems.

Vorzugsweise wird die angeforderte redundante Information von mindestens einer der Anwendungseinheiten ebenfalls mittels eines Broadcasting-Mechanismus den weiteren Anwendungseinheiten zur Verfügung gestellt. Eine von einer Anwendungseinheit ermittelte redundante Information kann somit mit nur einer einzigen Nachricht an alle die redundante Information benötigenden Anwendungseinheiten übermittelt werden. Dadurch wird die Belastung des Kommunikationssystems nochmals verringert.

Im Gegensatz hierzu wird bei den bekannten Verfahren entweder eine von einer Anwendungseinheit ermittelte redundante Information an alle anderen diese Information benötigenden Anwendungseinheiten mittels separater Nachrichten übermittelt oder es werden sämtliche redundanten Informationen zunächst an den Master gesendet und von dort wird eine als fehlerfrei beurteilte Information mittels separater Nachrichten an jede die Information benötigenden Anwendungseinheiten übermittelt.

Demgegenüber müssen mit dem erfindungsgemäßen Verfahren deutlich weniger Nachrichten zur Übermittlung einer redundanten Information über das Kommunikationssystem übermittelt werden.

Gemäß einer bevorzugten Ausführungsform des erfindungsgemäßen Verfahrens wird vorgeschlagen, dass jeder der Anwendungseinheiten und/oder jeder Art der ermittelnden Informationen eindeutige Kennungen zugeordnet sind. Damit kann auf sehr einfache Weise erreicht werden, dass eine Anwendungseinheit nur die für sie bestimmten Nachrichten weiterbearbeitet. Hierzu kann einer Nachricht, insbesondere einer Votinganforderung oder einer Nachricht zur Übermittlung einer redundanten Information, die entsprechende Kennung beigefügt werden. Jede Anwendungseinheit (bzw. jeder einer Anwendungseinheit zugeordnete Votingcontroller) hat dabei Zugriff auf eine Liste von Kennungen, die diejenigen Nachrichten identifizieren, die an die betreffende Anwendungseinheit weitergeleitet werden sollen. Diese Nachrichten betreffen einerseits Votinganforderungen bezüglich redundanter Daten, die von eben dieser Anwendungseinheit ermittelt werden, sowie benötigte redundante Daten, die von dieser oder einer anderen Anwendungseinheit angefordert wurden. Zweckmässigerweise werden die verschiedenen möglichen Nachrichten hierbei kategorisiert, beispielsweise in Abhängigkeit von der Art eines während des Betriebes eines Kraftfahrzeugs ermittelten Sensorwertes wie Umgebungstemperatur, Kühlmitteltemperatur, Drehzahl, Lenkwinkel, o.ä.. Jeder Kategorie wird dann eine Kennung zugeordnet. Ebenso ist es möglich, jeder Anwendungseinheit eine eindeutige Kennung zuzuordnen.

Vorzugsweise ist den Kennungen eine Priorität zugeordnet. Dies ermöglicht die Bestimmung einer Sendereihenfolge der Anwendungseinheiten, wenn diese auf eine Votinganforderung antworten. Dadurch kann eine Kollisionsregelung auf dem Kommunikationssystem realisiert werden. Hierbei kann das Kommunikationssystem beispielsweise vorsehen, dass stets diejenige Anwendungseinheit mit der höchsten Priorität eine Nachricht zu senden berechtigt ist. Versuchen folglich in Folge einer Votinganforderung sämtliche Anwendungseinheiten, die eine der Votinganforderung entsprechende redundante Information ermittelt haben, gleichzeitig die redundante Information zu übermitteln, so kann entsprechend der Priorität die Sendereihenfolge der Anwendungseinheiten bestimmt werden. Hierbei kann beispielsweise ein dominant/rezessives Kommunikationssystem, wie beispielsweise ein CAN-Bussystem besonders vorteilhaft eingesetzt werden.

In einer bevorzugten Ausführungsform des Verfahrens werden die redundanten Informationen von den entsprechenden Anwendungseinheiten synchron ermittelt. Sind die redundanten Informationen beispielsweise Temperaturen, die mittels mehrerer redundanter Temperatursensoren ermittelt werden, kann es zweckmäßig sein, die redundanten Daten stets zum gleichen Zeitpunkt zu ermitteln. In Bereichen, in denen mit sich rasch ändernden Sensorwerten zu rechnen ist, könnte dies andernfalls zu unterschiedlichen redundanten Daten führen. Ein Erkennen von fehlerhaften Daten wäre hierbei erschwert, da aufgrund der unterschiedlichen redundanten Daten auf ein oder mehrere fehlerhafte Daten geschlossen werden würde, was aber nicht notwendigerweise den Tatsachen entspräche.

Vorzugsweise wird der Votinganforderung eine für eine Synchronisation der die redundanten Informationen ermittelnden Anwendungseinheiten erforderliche Information beigefügt. Da die Votinganforderung mittels eines Broadcasting-Mechanismus an alle Anwendungseinheiten übermittelt wird, kann eine für die Synchronisation erforderliche Information, beispielsweise eine interne Zeit der anfordernden Anwendungseinheit besonders effizient an die anderen Anwendungseinheiten, die die angeforderten redundante Information ermitteln, übermittelt werden.

Vorteilhafterweise weist das Kommunikationssystem Mechanismen zur Datenkonsistenzabsicherung auf. Derartige Mechanismen können beispielsweise Prüfsummen sein, die einer Nachricht hinzugefügt werden. Anhand der Prüfsummen kann dann eine falsch gesendete Nachricht erkannt werden. Die Mechanismen zur Datenkonsistenzabsicherung können beispielsweise bei mehrfach falsch erkannten Nachrichten einen Neustart des Kommunikationssystems auslösen. Weist das Kommunikationssystem derartige Mechanismen auf, kann verhindert werden, dass eine Anwendungseinheit, die eine redundante Information korrekt ermittelt hat, als fehlerhaft klassifiziert wird, weil die Information durch einen Übertragungsfehler auf dem Kommunikationssystem verfälscht wurde.

Gemäß einer bevorzugten Ausführungsform sind die Anwendungseinheiten durch mehrere Kommunikationssysteme miteinander verbunden. Dabei werden die redundanten Informationen über mindestens zwei der Kommunikationssysteme redundant übertragen. Dies ermöglicht es, Fehler bei der Datenübertragung zu erkennen bzw. eine Fehlertoleranz bezüglich aufgetretener Übertragungsfehler zu erreichen. Vorteilhafterweise werden die Kommunikationssysteme auf unterschiedliche Art betrieben. Hierfür können beispielsweise unterschiedliche Bussysteme eingesetzt werden.

Es ist aber auch möglich, identische Kommunikationssysteme zu verwenden, jedoch beispielsweise den Anwendungseinheiten bezüglich der Kommunikationssysteme unterschiedliche Kennungen bzw. Prioritäten zuzuordnen. Dadurch kann beispielsweise der negative Einfluss von transienten Fehlern während der Datenübertragung verringert werden.

Vorzugsweise werden die von einer Anwendungseinheit über die verschiedene Kommunikationssysteme empfangenen redundanten Nachrichten verglichen. In Abhängigkeit von dem Ergebnis des Vergleichs erfolgt eine Fehlererkennung. Vorzugsweise wird eine von einer Anwendungseinheit empfangene Nachricht dann als fehlerfrei beurteilt, wenn sie mit den über der Mehrheit der Kommunikationssysteme empfangenen redundanten Nachrichten übereinstimmt.

Die Aufgabe wird auch durch einen Votingcontroller der eingangs genannten Art dadurch gelöst, dass der Votingcontroller Mittel aufweist, um eine Votinganforderung mittels eines Broadcasting-Mechanismus über das Kommunikationssystem an andere Anwendungseinheiten zu senden. Der Votingcontroller weist ferner Mittel zum Empfang einer Nachricht auf, die von mindestens einer der anderen Anwendungseinheiten die eine der Votinganforderung entsprechende Information ermittelt haben, mittels eines Broadcasting-Mechanismus an den Votingcontroller übermittelt werden.

Die Vorteile des erfindungsgemäßen Votingcontrollers ergeben sich entsprechend zu den o.g. Vorteilen des erfindungsgemäßen Verfahrens.

Vorteilhafterweise ist der Votingcontroller gemäß einem der Ansprüche 17 bis 19 ausgebildet.

Die Aufgabe wird auch durch ein elektronisches System der eingangs genannten Art dadurch gelöst, dass mindestens eine der Anwendungseinheiten Mittel zum Übermitteln einer Votinganforderung mittels eines Broadcasting-Mechanismus über das Kommunikationssystem an andere Anwendungseinheiten aufweist, die anderen Anwendungseinheiten Mittel zum Empfang der Votinganforderung aufweisen und die Anwendungseinheiten, die eine der Votinganforderung entsprechende Information ermittelt haben, Mittel zum Übermitteln der Information an die anfordernde Anwendungseinheit aufweisen.

Von besonderer Bedeutung ist die Realisierung des erfindungsgemäßen Verfahrens in der Form eines Computerprogramms. Dabei ist das Computerprogramm auf einem elektronischen System, insbesondere auf einem Mikroprozessor, ablauffähig und zur Ausführung des erfindungsgemäßen Verfahrens programmiert. In diesem Fall wird die Erfindung durch das Computerprogramm realisiert, so dass das Computerprogramm in gleicher Weise die Erfindung darstellt wie das Verfahren, zu dessen Ausführung das Computerprogramm geeignet ist. Das Computerprogramm ist vorzugsweise auf einem maschinenlesbaren Datenträger abgespeichert. Als maschinenlesbarer Datenträger kann beispielsweise ein Random-Access-Memory, ein Read-Only-Memory, ein Flash-Memory, eine Digital-Versitile-Disc oder eine Compact-Disc zum Einsatz kommen.

### Zeichnungen

Weitere Anwendungsmöglichkeiten und Vorteile der Erfindung ergeben sich aus der nachfolgenden Beschreibung von Ausführungsbeispielen, die in der Zeichnung dargestellt sind. Es zeigen:
Figur 1 eine schematische Darstellung eines ersten Ausführungsbeispiels eines elektronischen Systems zur Durchführung des erfindungsgemäßen Verfahrens;
Figur 2 eine schematische Darstellung eines zweiten Ausführungsbeispiels eines elektronischen Systems zur Durchführung des erfindungsgemäßen Verfahrens;
Figur 3 eine Übersicht über das erfindungsgemäße Verfahren mittels eines Ablaufdiagramms;
Figur 4 ein Detail des erfindungsgemäßen Verfahrens mittels eines weiteren Ablaufdiagramms.

### Beschreibung der Ausführungsbeispiele

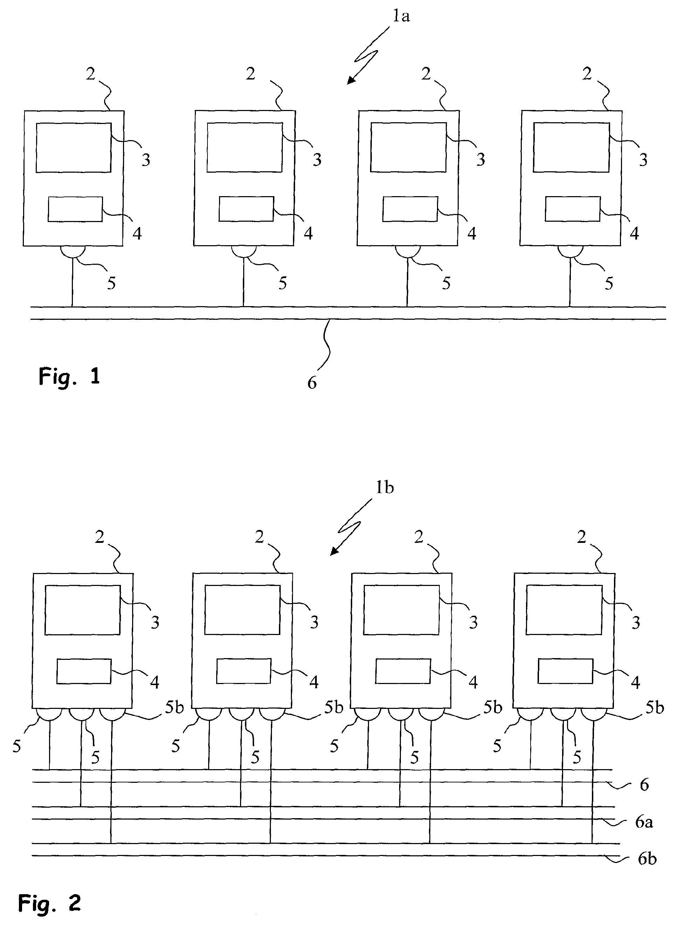

In Figur 1 ist ein mehrere Knoten 2 umfassendes elektronisches System 1a dargestellt. Jeder der Knoten 2 weist eine Anwendungseinheit 3 und einen der Anwendungseinheit 3 zugeordneten Votingcontroller 4 auf. Jeder Knoten 2 ist über ein Interface 5 mit einem Kommunikationssystem, beispielsweise einem Bussystem 6 verbunden. Das Bussystem 6 ermöglicht einen Datenaustausch der Knoten 2 untereinander. Das Bussystem 6 kann beispielsweise als ein Controller-Area-Network (CAN) ausgebildet sein.

Ein Knoten 2 kann beispielsweise einen Sensor umfassen, der es ermöglicht, Daten (Sensorwerte) zu erfassen. Diese Daten können dann von der Anwendungseinheit 3 verarbeitet werden. Es kann auch vorgesehen sein, dass diese Daten von weiteren Anwendungseinheiten 3 bzw. Knoten 2 zur weiteren Verarbeitung benötigt werden.

Die Anwendungseinheit 3 eines Knotens 2 kann aber auch als ein Rechengerät ausgestaltet sein, auf dem ein Computerprogramm ausgeführt wird. Mittels des Computerprogramms können Informationen erzeugt bzw. berechnet werden. Die so ermittelten Informationen können dann mittels des Bussystems 6 weiteren Anwendungseinheiten 3 zur Verfügung gestellt werden. Insbesondere kann eine Anwendungseinheit folglich zur Ermittlung von Informationen, Informationen von anderen Anwendungseinheiten 3 benötigen.

Wird das elektronische System 1a beispielsweise in einer sicherheitsrelevanten Umgebung eingesetzt (Steuerung eines Flugzeugs oder Realisierung eines steer-by-wire in einem Kraftfahrzeug), sind die Knoten 2 derart ausgelegt, dass die von diesen ermittelten Informationen redundant ermittelt werden. Zu diesem Zweck werden die erforderlichen Informationen von mehreren Knoten 2 gleichzeitig oder zeitversetzt erzeugt und verarbeitet. Werden Informationen derart redundant ermittelt, so wird vor einer Weiterbearbeitung dieser Informationen mittels eines Voting-Mechanismus diejenige Information ermittelt, die mit hoher Wahrscheinlichkeit nicht fehlerhaft ist.

In Figur 2 ist ein elektronisches System 1b dargestellt, das ebenfalls mehrere Knoten 2 umfasst. Jeder Knoten 2 weist eine Anwendungseinheit 3 und einen der Anwendungseinheit 3 zugeordneten Votingcontroller 4 auf.

Jeder Knoten 2 des elektronischen Systems 1b weist außerdem drei Interfaces 5, 5a, 5b auf, mit denen der Knoten 2 mit drei Kommunikationssystemen, beispielsweise drei Bussystemen 6, 6a, 6b verbunden ist. Die Bussysteme 6, 6a, 6b ermöglichen jeweils einen Datenaustausch der Knoten 2 untereinander. Dabei sind die Knoten 2 und die Interface 5, 5a, 5b derart konfiguriert, dass ein redundanter Datenaustausch zwischen den Knoten 2 mittels der Bussysteme 6, 6a, 6b ermöglichst ist. Dies kann dadurch realisiert werden, dass eine von einer Anwendungseinheit 3 an eine oder mehrere der anderen Anwendungseinheiten 3 zu übermittelnde Information über zwei oder drei der Bussysteme 6, 6a, 6b übermittelt wird. Die Bussysteme können hierzu identisch, beispielsweise als CAN, realisiert sein. Es ist auch möglich, dass die Bussysteme 6, 6a, 6b mittels unterschiedlicher Busarchitekturen realisiert sind. So kann beispielsweise das Bussystem 6 als CAN realisiert sein, wohingegen die Bussysteme 6a, 6b als FlexRay realisiert sind.

Sind die Bussysteme 6, 6a, 6b identisch realisiert, so kann vorgesehen sein, dass jede Information, die in Form einer Nachricht von einer Anwendungseinheit 2 an eine oder mehrere der anderen Anwendungseinheiten 2 übermittelt werden soll, parallel und zeitgleich über alle drei Bussysteme 6, 6a, 6b übermittelt wird. In diesem Fall werden die Bussysteme 6, 6a, 6b auf identische Art betrieben.

Es ist ferner möglich, die Bussysteme 6, 6a, 6b unterschiedlich zu betreiben. Erfolgt der Zugriff auf die Bussysteme 6, 6a, 6b beispielsweise in Abhängigkeit einer der Anwendungseinheit 3 bzw. dem Knoten 2 zugeordneten Priorität, kann vorgesehen sein, dass ein Knoten 2, bzw. eine Anwendungseinheit 3, unterschiedliche Prioritäten bezüglich der Bussysteme 6, 6a, 6b aufweist. Ist einer Anwendungseinheit 3 beispielsweise eine hohe Priorität bezüglich des Bussystems 6, jedoch eine niedrige Priorität bezüglich des Bussystems 6a zugeordnet, so wird eine redundant zu versendende Nachricht häufig zuerst über das Bussystem 6 und dann über das Bussystem 6a übermittelt, da die bezüglich des Bussystems 6 hochpriore Nachricht andere, niedrigpriore Nachrichten verdrängen wird, wohingegen die bezüglich des Bussystems 6a niedrigpriore Nachricht erst dann übermittelt werden kann, wenn keine höherpriore Nachricht, beispielsweise von einem anderen Knoten 2, über das Bussystem 6a zu übermitteln ist.

Mit dem in Figur 2 gezeigten Ausführungsbeispiel des elektronischen Systems 1b, bei dem auch Übertragungsfehler erkannt bzw. kompensiert werden können, kann eine höhere Fehlertoleranz erreicht werden, als mit dem in Figur 1 gezeigten elektronischen System 1a. Die Fehlertoleranz kann nochmals dadurch erhöht werden, dass die Bussysteme 6, 6a, 6b unterschiedlich arbeiten und/oder durch unterschiedliche Bus-Architekturen realisiert sind, da hierbei beispielsweise der Einfluss von transienten Übertragungsfehlern reduziert werden kann.

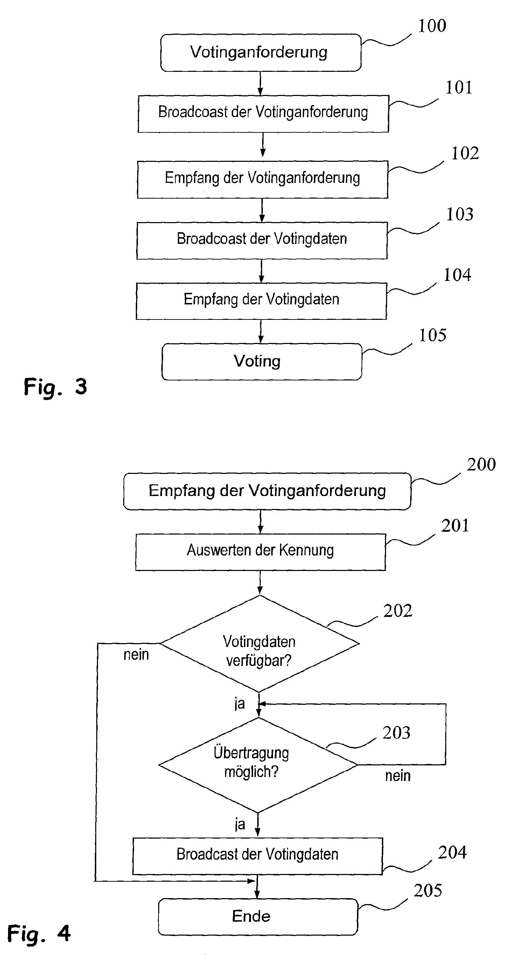

In Figur 3 ist eine Übersicht über das erfindungsgemäße Verfahren anhand eines Ablaufdiagramms dargestellt.

Das Verfahren startet in einem Schritt 100, in dem eine Anwendungseinheit 3 eine Votinganforderung an andere Anwendungseinheiten 3 übermitteln möchte. Dies kann beispielsweise dann der Fall sein, wenn die Anwendungseinheit 3 eine von mehreren anderen Anwendungseinheiten 3 redundant ermittelte Information benötigt. Eine derartige Information kann beispielsweise ein von mehreren, redundant in dem elektronischen System vorhandenen Sensoren ermittelter Wert sein. Beispielsweise kann das elektronische System bei der Realisierung einer Lenkung in einem Kraftfahrzeug (steer-by-wire) eingesetzt werden und mehrere redundante Sensoren aufweisen, die einen von einem Fahrer vorgegebenen Lenkwinkel erfassen.

Insbesondere in sicherheitsrelevanten Umgebungen, beispielsweise im Kraftfahrzeug oder bei der Steuerung eines Flugzeugs, werden Daten von mehreren Sensoren parallel redundant erfasst, um fehlerhaft erfasste Daten zu erkennen, bzw. auch bei der Anwesenheit fehlerhafter Daten einen korrekten Betrieb des elektronischen Systems zu ermöglichen.

In einem Schritt 101 wird die Votinganforderung über das Bussystem 6 mittels eines Broadcasting-Mechanismus an die anderen Knoten 2 und damit die anderen Anwendungseinheiten 3 übermittelt. Ist das elektronische System wie in Figur 2 dargestellt ausgestaltet, so kann vorgesehen sein, dass die Votinganforderung über die redundant vorhandenen Bussysteme 6, 6a, 6b mittels des Broadcasting-Mechanismus an die anderen Knoten 2 übermittelt wird.

Der Broadcasting-Mechanismus ermöglicht es, dass die Votinganforderung alle anderen Anwendungseinheiten 3 erreicht. Die Anwendungseinheiten 3, die eine der Votinganforderung entsprechende Information (erfasster Wert eines Sensors oder ein durch die Anwendungseinheit 3 berechneter Wert) ermittelt haben, übermitteln diese dann über eines oder mehrere der Bussysteme 6, 6a, 6b an den anfordernden Knoten 2.

Damit eine Anwendungseinheit 3, die eine Votinganforderung erhält, erkennt, ob die Votinganforderung für sie bestimmt ist, ist der Votinganforderung eine Kennung zugeordnet. Die Kennung kann die Art der angeforderten Information (z.B. Kühlmitteltemperatur, Außentemperatur, Lenkwinkel, Umgebungsdruck, etc.), die Art des die Information ermittelnden Elements (Art des ermittelnden Sensors, Klassifizierung einer berechnenden Anwendungseinheit 3, etc.), beschreiben, bzw. diesem zugeordnet sein. Die Kennung kann insbesondere auch den anfordernden Knoten 2 bzw. die anfordernde Anwendungseinheit 3 selbst kennzeichnen.

In einem Schritt 103 übermittelt jede der Anwendungseinheiten 3, die das angeforderte Datum ermittelt haben, dieses mittels des Bussystems 6, 6a, 6b an den anfordernden Knoten 2. Da die angeforderten Daten von mehreren Anwendungseinheiten 3 redundant ermittelt wurden, werden in Folge einer Votinganforderung von mehreren Anwendungseinheiten 3 angeforderte Votingdaten über das Bussystem 6, 6a, 6b übermittelt. Hierbei kann es zu Kollisionen kommen, wenn die Nachrichten nahezu gleichzeitig übermittelt werden sollen. Zur Vermeidung derartiger Kollisionen bzw. zur Regelung des Zugriffs auf die Bussysteme 6, 6a, 6b können den Knoten 2 eindeutige Prioritäten bezüglich der Bussysteme 6, 6a, 6b zugeordnet sein. Dadurch wird erreicht, dass die Votinganforderung von den Anwendungseinheiten 3, die die angeforderten Daten redundant ermittelt haben, in der Reihenfolge über das Bussystem 6, 6a, 6b übermittelt werden, die durch die vorgegebene Priorität bezüglich des jeweiligen Bussystems 6, 6a, 6b bestimmt ist.

Die angeforderten, redundant ermittelten Votingdaten werden dann von den jeweiligen Anwendungseinheiten 3 an die anfordernde Anwendungseinheit 3 übermittelt. Dabei wird vorteilhafter Weise ein Broadcasting-Mechanismus des Bussystems 6, 6a, 6b genutzt. Dies ermöglicht es nämlich, dass eine auf eine Votinganforderung hin gesendete Information prinzipiell allen anderen Anwendungseinheiten 3 zugänglich ist. Benötigen folglich mehrere Anwendungseinheiten 3 dieselben Votingdaten, so genügt es, dass das Übermitteln der Votingdaten durch nur eine der Anwendungseinheiten 3 durch Übermitteln der Votinganforderung initiiert wird. Ferner wird die dadurch angeforderte redundante Information von jeder Anwendungseinheit 3, die diese Information ermittelt hat, nur einmal mittels eines jeden der Bussysteme 6, 6a, 6b übertragen und kann doch jeden anderen Knoten 2 erreichen. Dadurch wird eine besonders geringe Belastung der Kapazität des Bussystems 6, 6a, 6b ermöglicht.

In einem Schritt 104 werden die angeforderten, redundanten Informationen zumindest von der anfordernden Anwendungseinheit 3 empfangen. Es ist jedoch vorstellbar, dass auch noch andere Anwendungseinheiten 3 diese Information benötigen und diese deshalb von dem entsprechenden Knoten 2 von dem Bussystem 6, 6a, 6b gelesen werden.

In einem Schritt 105 hat der die redundante Information anfordernde Knoten 2 (bzw. die weiteren, diese Information benötigenden Knoten 2) sämtliche redundanten Informationen erhalten und führt ein Voting durch. Bei dem Voting wird entschieden, ob eines oder mehrere der redundant ermittelnden Daten fehlerhaft ist. Dies kann beispielsweise durch einen Vergleich der empfangenen redundanten Informationen erfolgen. Erfolgt das Voting in mehreren Knoten 2, dann kann zur Absicherung auf gleiche Art und Weise noch ein Voting über die Votingergebnisse erfolgen.

Wird ein bestimmtes Votingdatum von der Mehrheit der redundanten Anwendungseinheiten identisch übermittelt, so kann das Voting vorsehen, dass das mehrheitliche Votingdatum als korrekt angesehen wird. Das Voting wird durch den Votingcontroller 4 des die redundanten Informationen empfangenden Knotens 2 durchgeführt.

In Figur 4 ist die Bearbeitung einer von einem Knoten 2 mittels des Bussystems 6, 6a, 6b empfangenen Votinganforderung anhand eines Flussdiagramms schematisch dargestellt.

In einem Schritt 200 empfängt der Knoten 2 die Votinganforderung einer Anwendungseinheit 3, die einem anderen Knoten 2 zugeordnet ist.

In einem Schritt 201 wird eine der Votinganforderung zugeordneten und mit dieser übermittelten Kennung ausgewertet. Die Kennung kann beispielsweise die angeforderten Informationen identifizieren. Hierzu ist beispielsweise innerhalb des elektronischen Systems 1a, 1b jeder Informationsart, die von Anwendungseinheiten 3 redundant ermittelt wird, eine eindeutige Kennung zugeordnet. Jedem Knoten 2 ist eine Liste derjeniger Kennungen zugeordnet, die den anforderbaren Informationen entsprechen, die von eben dieser Anwendungseinheit 3 ermittelt werden.

In einem Schritt 202 wird geprüft, ob die Anwendungseinheit 3 der Votinganforderung entsprechende Informationen ermittelt hat, also ob sich die Votinganforderung auf derartige redundante Informationen bezieht, die von dem die Votinganforderung empfangenden Knoten 2 ermittelt werden. Die Auswertung der Kennung in dem Schritt 201 und die Entscheidung, ob die Votinganforderung für den die Votinganforderung empfangenden Knoten bestimmt ist, kann beispielsweise von dem einem Knoten 2 zugeordneten Votingcontroller 4 durchgeführt werden. Die Auswertung der Kennung und die Entscheidung kann aber auch durch die Interface 5, 5a, 5b vorgenommen werden.

Ist die empfangene Votinganforderung nicht für den die Votinganforderung empfangenden Knoten 2 bestimmt, so unternimmt der Knoten 2 nichts weiter und das in Figur 4 dargestellte Teilverfahren endet in dem Schritt 205.

Ist die Votinganforderung für den diese empfangenden Knoten 2 bestimmt, hat der Knoten 2 also entsprechende redundante Informationen ermittelt, so wird in einem Schritt 203 eine Übermittlung dieser Informationen durch den Knoten 2 veranlasst. Dazu werden die Informationen zunächst in eine durch ein sogenanntes Frame-Format vorgegebene Struktur überführt, die eine Übertragung über das Bussystem 6, 6a, 6b in Form einer Nachricht ermöglicht.

Dann wird geprüft, ob eine Übertragung auf dem Bussystem 6, 6a, 6b möglich ist oder ob gerade eine andere Nachricht übertragen wird. Dies kann beispielsweise dadurch geschehen, dass von dem entsprechenden Interface 5, 5a, 5b eine Übertragung der Nachricht mittels des Bussystems 6, 6a, 6b versucht wird. Die Unmöglichkeit der Übertragung kann beispielsweise dadurch festgestellt werden, dass von keiner anderen Anwendungseinheit 3 eine Bestätigung des Erhalts der Nachricht erfolgt.

Ist die Übertragung nicht möglich, wird eine erneute Übertragung versucht. Ist die Übertragung möglich, werden die angeforderten Informationen in Form der dem durch das Bussystem 6, 6a, 6b vorgegebenen Frame-Format entsprechenden Nachricht mittels eines Broadcasting-Mechanismus in dem Schritt 204 den anderen Knoten 2 zur Verfügung gestellt.

Anhand einer der Nachricht beigefügten Kennung können die anderen Anwendungseinheiten 3 bzw. die anderen Knoten 2 bei einem Empfang dieser Nachricht erkennen, ob die Nachricht von diesen angeforderte Informationen enthält oder für diese von Interesse sind. In einem Schritt 205 endet dieser Teil des Verfahrens.

Weitere Ausführungsformen des erfindungsgemäßen Verfahrens bzw. des erfindungsgemäßen elektronischen Systems sind denkbar.

Beispielsweise können zur Erkennung, ob eine Übertragung einer Nachricht mittels des Kommunikationssystems möglich ist, von dem jeweils verwendeten Kommunikationssystem bereitgestellte Mechanismen verwendet werden. Ist das Kommunikationssystem beispielsweise als ein CAN-Bussystem ausgebildet, kann der Mechanismus der sogenannten bitweisen Arbitrierung verwendet werden, bei der jedem Knoten eine binär codierte Priorität zugeordnet ist. Je höher hierbei die Priorität eines Knotens ist, desto geringer ist der dieser Priorität zugeordnete Binärwert. Eine Nachricht mit geringerem Binärwert, also höherer Priorität überschreibt eine Nachricht eines Knotens geringerer Priorität. Ein Knoten erkennt eine gescheiterte Übertragung einer von diesem Knoten gesendeten Nachricht daran, dass er die der gesendeten Nachricht beigefügte Kennung wieder zurückliest. Entspricht diese Kennung nicht der eigenen, wurde die Nachricht durch die Nachricht eines anderen Knotens überschrieben und muss folglich nochmals gesendet werden.

Da mit dem erfindungsgemäßen Verfahren durch das erfindungsgemäße elektronische System für eine Kommunikation zwischen den Knoten 2 weniger Nachrichten übertragen werden müssen als bei herkömmlichen Systemen, kann das zugrundeliegende Kommunikationssystem eine geringere Bandbreite aufweisen und damit kostengünstiger realisiert werden.

Ferner wird es mittels des erfindungsgemäßen Verfahrens ermöglicht, einen Zusatzdienst für die Synchronisation von den Knoten 2 zugeordneten Uhren zur Verfügung zu stellen. Hierzu kann beispielsweise die Zeit des anfordernden Knotens zusammen mit der mittels des Broadcasting-Mechanismus übertragenen Votinganforderung an die anderen Knoten 2 übermittelt und von diesen ausgelesen werden. Dennoch braucht das erfindungsgemäße Votingverfahren selbst jedoch nicht zeitgesteuert zu sein, wodurch eine Vielzahl unterschiedlicher Kommunikationssysteme verwendbar bleibt.

## Patentansprüche

1. Verfahren zur Durchführung eines Votings von redundanten Informationen, die von mehr als einer Anwendungseinheit (3) ermittelt werden, wobei die Anwendungseinheiten (3) durch mindestens ein Kommunikationssystem miteinander verbunden sind, **dadurch gekennzeichnet, dass** von einer Anwendungseinheit (3) eine Votinganforderung mittels eines Broadcasting-Mechanismus über das Kommunikationssystem an die anderen Anwendungseinheiten (3) gesendet wird und mindestens eine der anderen Anwendungseinheiten (3), die eine der Anforderung entsprechende Information ermittelt haben, diese an die anfordernde Anwendungseinheit (3) übermittelt.

2. Verfahren nach Anspruch 1, **dadurch gekennzeichnet, dass** als Kommunikationssystem ein Bussystem (6, 6a, 6b) verwendet wird.

3. Verfahren nach Anspruch 1 oder 2, **dadurch gekennzeichnet, dass** die angeforderte Information von mindestens einer der anderen Anwendungseinheiten (3) mittels eines Broadcasting-Mechanismus den weiteren Anwendungseinheiten (3) zur Verfügung gestellt wird.

4. Verfahren nach einem der vorangehenden Ansprüche, **dadurch gekennzeichnet, dass** mindestens einer Anwendungseinheit (3) und/oder mindestens einer Art der ermittelten Informationen eine eindeutige Kennung zugeordnet ist.

5. Verfahren nach Anspruch 4, **dadurch gekennzeichnet, dass** der Kennung eine Priorität zugeordnet ist.

6. Verfahren nach einem der vorangehenden Ansprüche, **dadurch gekennzeichnet, dass** die redundanten Informationen synchron ermittelt werden.

7. Verfahren nach einem der vorangehenden Ansprüche, **dadurch gekennzeichnet, dass** der Votinganforderung eine für eine Synchronisation der die redundanten Informationen ermittelnden Anwendungseinheiten (3) erforderliche Information beigefügt wird.

8. Verfahren nach einem der vorangehenden Ansprüche, **dadurch gekennzeichnet, dass** das Kommunikationssystem Mechanismen zur Datenkonsistenzabsicherung aufweist.

9. Verfahren nach einem der vorangehenden Ansprüche, **dadurch gekennzeichnet, dass** die Anwendungseinheiten (3) durch mehrere Kommunikationssysteme miteinander verbunden sind und die redundanten Informationen über mindestens zwei der Kommunikationssysteme redundant übertragen werden.

10. Verfahren nach Anspruch 9, **dadurch gekennzeichnet, dass** die Kommunikationssysteme auf unterschiedliche Art betrieben werden.

11. Verfahren nach einem der Ansprüche 4 bis 10, **dadurch gekennzeichnet, dass** den Anwendungseinheiten (3) bezüglich der Kommunikationssysteme unterschiedliche Kennungen zugeordnet sind.

12. Verfahren nach einem der Ansprüche 9 bis 11, **dadurch gekennzeichnet, dass** die von einer Anwendungseinheit (3) über die verschiedenen Kommunikationssysteme empfangenen redundanten Informationen verglichen werden und in Abhängigkeit von dem Ergebnis des Vergleichs eine Fehlererkennung erfolgt.

13. Verfahren nach Anspruch 12, **dadurch gekennzeichnet, dass** eine von einer Anwendungseinheit (3) empfangene redundante Information dann als fehlerfrei beurteilt wird, wenn sie über die Mehrheit der Kommunikationssysteme identisch empfangen wurde.

14. Computerprogramm, das auf einem elektronischen System (1a, 1b) ablauffähig ist, **dadurch gekennzeichnet, dass** das Computerprogramm ein Verfahren nach einem der Ansprüche 1 bis 13 ausführt, wenn es auf dem elektronischen System (1a, 1b) abläuft.

15. Maschinenlesbarer Datenträger, auf dem ein Computerprogramm abgespeichert ist, das auf einem elektronischen System (1a, 1b) ausführbar ist, **dadurch gekennzeichnet, dass** das Computerprogramm ein Verfahren nach einem der Ansprüche 1 bis 13 ausführt, wenn es auf dem elektronischen System (1a, 1b) abgearbeitet wird.

16. Votingcontroller zur Durchführung eines Votings der von mehr als einer Anwendungseinheit (3) ermittelten redundanten Informationen, wobei der Votingcontroller mindestens einer Anwendungseinheit (3) zugeordnet ist und die Anwendungseinheiten (3) durch mindestens ein Kommunikationssystem miteinander verbunden sind, **dadurch gekennzeichnet, dass** der Votingcontroller Mittel aufweist, um eine Votinganforderung mittels eines Broadcasting-Mechanismus über das Kommunikationssystem an andere Anwendungseinheiten (3) zu senden, und Mittel zum Empfang einer Nachricht aufweist, die von mindestens einer der anderen Anwendungseinheiten (3), die eine der Votinganforderung entsprechende Information ermittelt haben, mittels eines Broadcasting-Mechanismus an den Votingcontroller übermittelt werden.

17. Votingcontroller nach Anspruch 16, **dadurch gekennzeichnet, dass** der Votingcontroller Mittel zum Senden von Votinganfragen und zum Empfang von redundanten Informationen über mehrere identische Bussysteme (6, 6a, 6b) aufweist.

18. Votingcontroller nach Anspruch 16 oder 17, **dadurch gekennzeichnet, dass** der Votingcontroller Mittel zum Senden von Votinganfragen und zum Empfang von redundanten Informationen über mehrere unterschiedliche Bussysteme (6, 6a, 6b) aufweist.

19. Votingcontroller nach einem der Ansprüche 16 bis 18, **dadurch gekennzeichnet, dass** der Votingcontroller Mittel zur Durchführung eines Verfahrens nach einem der Ansprüche 1 bis 13 aufweist.

20. Elektronisches System (1a, 1b), das mehrere, teilweise redundante Informationen ermittelnde Anwendungseinheiten (3) umfasst, wobei die Anwendungseinheiten (3) durch mindestens ein Kommunikationssystem miteinander verbunden sind und wobei auf dem elektronischen System (1a, 1b) ein Voting durchführbar ist, **dadurch gekennzeichnet, dass** mindestens eine der Anwendungseinheiten (3) Mittel zum Übermitteln einer Votinganforderung mittels eines Broadcasting-Mechanismus über das Kommunikationssystem an andere Anwendungseinheiten (3) aufweist, die anderen Anwendungseinheiten (3) Mittel zum Empfang der Votinganforderung aufweisen und diejenigen der anderen Anwendungseinheiten (3), die eine der Votinganforderung entsprechende Information ermittelt haben, Mittel zum Übermitteln der Information an die anfordernde Anwendungseinheit (3) aufweisen.

21. Elektronisches System (1a, 1b) nach Anspruch 20, **dadurch gekennzeichnet, dass** das elektronische System (1a, 1b) Mittel zur Durchführung eines Verfahrens nach einem der Ansprüche 1 bis 13 aufweist.
